# EUROPÄISCHE PATENTANMELDUNG

(11) **EP 2 860 074 A1**
(43) Veröffentlichungstag der Anmeldung: **15.04.2015**
(21) Anmeldenummer: 14183865.6
(22) Anmeldetag: 08.09.2014
(51) Int. Cl.: B60T 10/02, F16D 57/04

(54) **Hydrodynamische Dauerbremseinrichtung**

(30) Priorität: 08.10.2013 DE 102013220314
(71) Anmelder: ZF Friedrichshafen AG, 88046 Friedrichshafen (DE)
(72) Erfinder: Truebenbach, Michael, 88045 Friedrichshafen (DE)

(57) **Zusammenfassung**

Die Erfindung betrifft eine hydrodynamische Dauerbremseinrichtung (1), umfassend einen Stator (5) und einen Rotor (4), welcher für einen Bremsbetrieb mit einer Welle (2) koppelbar ist. Um nun eine Dauerbremseinrichtung (1) zu schaffen, bei welcher eine Zuschaltbarkeit des Rotors (4) auf möglichst einfache, sowie verlustarme Art und Weise verwirklicht ist, ist zwischen der Welle (2) und dem Rotor (4) ein schaltbarer Freilauf (10) vorgesehen, der in einem gesperrten Zustand den Rotor (4) mit der Welle (2) koppelt.

## Beschreibung

Die Erfindung betrifft eine hydrodynamische Dauerbremseinrichtung, umfassend einen Stator und einen Rotor, welcher für einen Bremsbetrieb mit einer Welle koppelbar ist. Des Weiteren betrifft die Erfindung einen Antriebsstrang eines Kraftfahrzeuges, bei welchem eine erfindungsgemäße Dauerbremseinrichtung zur Anwendung kommt.

Hydrodynamische Dauerbremseinrichtungen kommen insbesondere bei Nutzfahrzeugen als verschleißfreie Bremsanlagen zur Anwendung. Dabei wird die Strömungsenergie einer Flüssigkeit zur Erzeugung eines Bremsmoments genutzt, welche zu diesem Zweck in einen Arbeitsraum zwischen einem Stator und einem Rotor eingebracht wird. In dem üblicherweise torusförmig gestalteten Arbeitsraum nimmt dann der sich drehende Rotor die Flüssigkeit über eine Beschaufelung mit und fördert diese zu einer Beschaufelung des Stators, wo sich die Flüssigkeit abstützt und im Folgenden wiederum zu der Beschaufelung des Rotors zurückgeleitet wird. Hierbei wird ein verzögerndes Moment auf den Rotor ausgeübt, wobei eine Größe dieses Bremsmoments dabei über die in den Arbeitsraum eingebrachte Flüssigkeitsmenge gesteuert wird. Allerdings tritt bei einer hydrodynamischen Dauerbremseinrichtung auch im unbefüllten Zustand des Arbeitsraumes üblicherweise ein gewisses Bremsmoment auf, welches seine Ursache in einem Umpumpen von Luft und Resten an Flüssigkeit zwischen dem sich drehenden Rotor und dem Stator hat. Um diese Lüfterverluste zu vermeiden, werden hydrodynamische Dauerbremseinrichtungen zum Teil so ausgeführt, dass der Rotor erst für einen Bremsbetrieb mit einer abzubremsenden Welle gekoppelt und in der Folge in Drehbewegung versetzt wird, während die Welle ansonsten frei zum Rotor verdreht werden kann.

Aus der EP 1 590 220 B1 geht eine hydrodynamische Dauerbremseinrichtung hervor, welche einen einen Stator und einen Rotor aufweisenden Retarder umfasst. Der Rotor des Retarders ist dabei nicht permanent an einer im Bremsbetrieb abzubremsenden Welle angebunden, sondern wird erst für den Bremsbetrieb mit der Welle gekoppelt. Die Koppelung kann dabei über eine als Klauenkupplung ausgeführte Schaltkupplung vorgenommen werden.

Ausgehend vom vorstehend beschriebenen Stand der Technik ist es nun die Aufgabe der vorliegenden Erfindung, eine hydrodynamische Dauerbremseinrichtung zu schaffen, bei welcher eine Zuschaltbarkeit eines Rotors auf möglichst einfache, sowie verlustarme Art und Weise verwirklicht ist.

Diese Aufgabe wird ausgehend vom Oberbegriff des Anspruchs 1 in Verbindung mit dessen kennzeichnenden Merkmalen gelöst. Die hierauf folgenden, abhängigen Ansprüche geben jeweils vorteilhafte Weiterbildungen der Erfindung wieder. Ein Antriebsstrang eines Kraftfahrzeuges, bei welchem eine erfindungsgemäße Dauerbremseinrichtung zur Anwendung kommt, geht zudem aus dem Anspruch 8 hervor.

Gemäß der Erfindung umfasst eine hydrodynamische Dauerbremseinrichtung einen Stator und einen Rotor, welche für einen Bremsbetrieb mit einer Welle gekoppelt werden kann. Der Stator und der Rotor sind dabei auf den Fachmann prinzipiell bekannte Art und Weise insbesondere jeweils mit je einer Beschaufelung ausgestattet und definieren zwischen sich einen Arbeitsraum zur Aufnahme von Flüssigkeit. Die in den Arbeitsraum eingebrachte Flüssigkeit wird bei einer Drehbewegung des Rotors über dessen Beschaufelung mitgenommen und in Richtung der Beschaufelung des Stators beschleunigt, wo sich die Flüssigkeit an der Beschaufelung abstützt und wiederum zurück zu der Beschaufelung des Rotors geleitet wird. Die zurückgeleitete Flüssigkeit wirkt dann verzögernd auf den Rotor, so dass bei dessen Ankoppelung an die Welle ein Bremsmoment auf die Welle hervorgerufen wird. Bei der Flüssigkeit kann es sich im Sinne der Erfindung um eine Hydraulikflüssigkeit oder auch eine sonstige Flüssigkeit, wie beispielsweise Wasser, handeln.

Die Erfindung umfasst nun die technische Lehre, dass zwischen der Welle und dem Rotor ein schaltbarer Freilauf vorgesehen ist, der in einem gesperrten Zustand den Rotor mit der Welle koppelt. Mit anderen Worten kann also eine Koppelung des Rotors mit der Welle für einen Bremsbetrieb mittels eines schaltbaren Freilaufs vorgenommen werden, welcher dazu in einen gesperrten Zustand überführt wird.

Eine derartige Ausgestaltung einer hydrodynamischen Dauerbremseinrichtung hat dabei den Vorteil, dass eine Koppelung des Rotors mit einer Welle mittels eines schaltbaren Freilaufs verlustarm und auf einfache Art und Weise realisiert werden kann. So muss für die Koppelung lediglich eine Freilaufwirkung des schaltbaren Freilaufs gesperrt werden, was auch bei vorherrschenden Differenzdrehzahlen vorgenommen werden kann, während im Falle formschlüssiger Schaltkupplungen zunächst die jeweiligen Kupplungshälften in ihren Drehzahlen synchronisiert werden müssen. In der Folge ist eine Betätigung eines schaltbaren Freilaufs im Vergleich zu formschlüssigen Kupplungen vereinfacht. Zudem zeichnet sich ein schaltbarer Freilauf im Freilaufbetrieb gegenüber kraftschlüssigen Schaltkupplungen durch zumeist geringere Verluste aus, da bei kraftschlüssigen Schaltkupplungen, insbesondere bei nasslaufenden Lamellenkupplungen, abseits eines geschlossenen Zustands teilweise hohe Schleppverluste auftreten.

Insgesamt kann also eine Koppelung des Rotors und der abzubremsenden Welle für einen Bremsbetrieb auf einfache Art und Weise vorgenommen werden, während abseits eines Bremsbetriebes im Rahmen der Freilaufwirkung geringe Verluste und damit auch geringe, ungewollte Bremsmomente durch den schaltbaren Freilauf hervorgerufen werden. Schließlich kann ein schaltbarer Freilauf problemlos mit kompaktem Aufbau ausgeführt werden, so dass für dessen Unterbringung im Bereich der erfindungsgemäßen hydrodynamischen Dauerbremseinrichtung nur ein geringer Bauraum vorzusehen ist.

Im Unterschied zu der erfindungsgemäßen Lehre kommt bei der hydrodynamischen Dauerbremseinrichtung der EP 1 590 220 B1 eine formschlüssige Schaltkupplung zur Anwendung, bei welcher zur Koppelung des Rotors und der abzubremsenden Welle die beiden Kupplungshälften vor einem Schließen in ihren Drehzahlen synchronisiert werden müssen. Bei der EP 1 590 220 B1 wird zur Synchronisierung dabei eine zwischen eine Antriebsmaschine und einem Getriebe des jeweiligen Antriebsstranges sitzende Trennkupplung zu Hilfe genommen, wodurch sich aber die Einleitung eines Bremsbetriebes und eine Betätigung der Schaltkupplung im Vergleich zu der erfindungsgemäßen Lehre entsprechend aufwändig gestaltet.

Unter einem "schaltbaren Freilauf" ist im Rahmen der Erfindung eine schaltbare Überholkupplung zu verstehen, welche im ungesperrten Zustand den Rotor und die Welle voneinander entkoppelt, während im gesperrten Zustand diese Freilaufwirkung gezielt unterbunden wird. Eine Überführung in den gesperrten Zustand muss dabei bei sich drehender Welle möglich sein.

Im Sinne der Erfindung kann die hydrodynamische Dauerbremseinrichtung durch einen Retarder gebildet sein oder aber diesen umfassen. Im erstgenannten Fall ist der schaltbare Freilauf dann Bestandteil des Retarders und sitzt dabei zwischen dem Rotor und der Welle, die in diesem Fall eine Bremswelle des Retarders ist. Der Rotor ist also über den Freilauf auf der Welle aufgesetzt und verbindet den Rotor mit der Welle im gesperrten Zustand drehfest, wohingegen der Freilauf abseits des gesperrten Zustands eine freie Verdrehbarkeit des Rotors zur Welle zulässt.

Alternativ dazu kann ein den Stator und den Rotor umfassender Retarder aber auch nur Bestandteil einer hydrodynamischen Dauerbremseinrichtung sein, wobei der schaltbare Freilauf in diesem Fall dann eine Einbindung des Retarders und damit des Rotors seitens eines Antriebsstranges des jeweiligen Kraftfahrzeuges vornimmt. Dabei ist eine Einbindung insbesondere mit Hilfe einer Hochtreiberstufe denkbar, wobei der schaltbare Freilauf dann im gesperrten Zustand bevorzugt ein Zahnrad dieser Hochtreiberstufe in den Kraftfluss einbindet und infolge dessen den Rotor koppelt. In diesem Fall kann es sich bei der Welle, mit welcher der Rotor über den schaltbaren Freilauf in Verbindung gebracht wird, um eine Bremswelle des Retarders, eine Getriebewelle oder auch eine Abtriebswelle einer Antriebseinheit handeln, je nachdem, ob die hydrodynamische Dauerbremseinrichtung antriebsseitig oder abtriebsseitig des Getriebes vorgesehen ist, also der Retarder als Primär- oder als Sekundärretarder zum Einsatz kommt.

Entsprechend einer Ausführungsform der Erfindung ist der Freilauf elektrisch oder hydraulisch aktuiert. In beiden Fällen kann eine Steuerung des Freilaufs auf kompakte Art und Weise verwirklicht werden, wobei im Falle einer hydraulischen Aktuierung bevorzugt eine Einbindung in eine Steuerhydraulik eines Kraftfahrzeuggetriebes vorgenommen wird.

Gemäß einer weiteren Ausgestaltung der Erfindung ist ein zwischen Rotor und Stator definierter Arbeitsraum permanent zumindest teilbefüllt. Hierdurch wird ein Ansprechverhalten der erfindungsgemäßen Dauerbremseinrichtung verbessert, da aufgrund der damit permanent im Arbeitsraum befindlichen Menge an Hydraulikflüssigkeit ab einer Koppelung des Rotors und der Welle direkt ein Bremsmoment hervorgerufen wird. Da der Rotor abseits eines Bremsbetriebes aufgrund der dann vorherrschenden Freilaufwirkung des Freilaufs von der Welle entkoppelt ist, bewirkt die permanent im Arbeitsraum befindliche Menge an Flüssigkeit kein oder nur ein zu vernachlässigendes Verlustmoment.

In Weiterbildung der vorgenannten Ausgestaltung sind dann Mittel vorgesehen, welche eine Mindestmenge an Flüssigkeit im Arbeitsraum halten. Vorteilhafterweise wird über diese Mittel verhindert, dass sich der Arbeitsraum zum Ende des Bremsbetriebs oder unmittelbar anschließend an den Bremsbetrieb bei noch laufendem Rotor entleert und bei einem folgenden Bremsbetrieb erst wieder befüllt werden muss. Dabei wird über die Mittel bevorzugt eine Mindestmenge an Flüssigkeit in dem Arbeitsraum gehalten, so dass bei erneuter Ankoppelung des Rotors zunächst ein geringes Bremsmoment hervorgerufen wird, welches dann durch Zuführung weiterer Flüssigkeit auf ein entsprechend gewünschtes Bremsmoment gesteigert werden kann. Dadurch, dass sich zu Beginn des Ankoppelns des Rotors an der Welle zunächst nur eine geringe Flüssigkeitsmenge im Arbeitsraum befindet, wird eine zu starke Belastung des Freilaufs beim Ankoppeln des Rotors verhindert.

Es ist eine weitere Ausführungsform der Erfindung, dass die Mittel durch mindestens ein Ventil gebildet sind, welches in je einer Abführleitung für Flüssigkeit vorgesehen ist und in einer Schaltstellung die je eine Abführleitung sperrt. In diesem Fall wird also die Flüssigkeitsmenge durch das Ventil an einem Verlassen des Arbeitsraumes gehindert. Alternativ zu der vorgenannten Ausgestaltung sind die Mittel durch mindestens einen Bypass gebildet, über welchen die den Arbeitsraum verlassende Flüssigkeit wieder direkt in den Arbeitsraum zurückführbar ist. In diesem Fall kann also die Flüssigkeit zwar aus dem Arbeitsraum entweichen, strömt aber bei einer Zuschaltung des mindestens einen Bypasses unmittelbar wieder in den Arbeitsraum zurück. Eine Zuschaltung des mindestens einen Bypasses erfolgt dabei bevorzugt über je ein Ventil. In den Fällen beider vorgenannten Ausgestaltungen kann dabei ein vollständiges Leerlaufen des Arbeitsraumes unterbunden werden, wobei durch entsprechende Steuerung das Halten einer Mindestflüssigkeitsmenge im Arbeitsraum realisierbar ist.

Die Erfindung ist nicht auf die angegebene Kombination der Merkmale des Hauptanspruchs oder der hiervon abhängigen Ansprüche beschränkt. Es ergeben sich darüber hinaus Möglichkeiten, einzelne Merkmale, auch soweit sie aus den Ansprüchen, der nachfolgenden Beschreibung bevorzugter Ausführungsformen der Erfindung oder unmittelbar aus den Zeichnungen hervorgehen, miteinander zu kombinieren. Die Bezugnahme der Ansprüche auf die Zeichnungen durch Verwendung von Bezugszeichen soll den Schutzumfang der Ansprüche nicht beschränken.

Vorteilhafte Ausgestaltungen der Erfindung, die nachfolgend erläutert werden, sind in den Zeichnungen dargestellt. Es zeigt:
- Fig. 1: eine Schnittansicht einer hydrodynamischen Bremseinrichtung entsprechend einer ersten Ausführungsform der Erfindung;
- Fig. 2: eine schematische Ansicht der hydrodynamischen Dauerbremseinrichtung aus Fig. 1; und
- Fig. 3: eine schematische Ansicht einer hydrodynamischen Dauerbremseinrichtung gemäß einer zweiten Ausgestaltungsmöglichkeit der Erfindung.

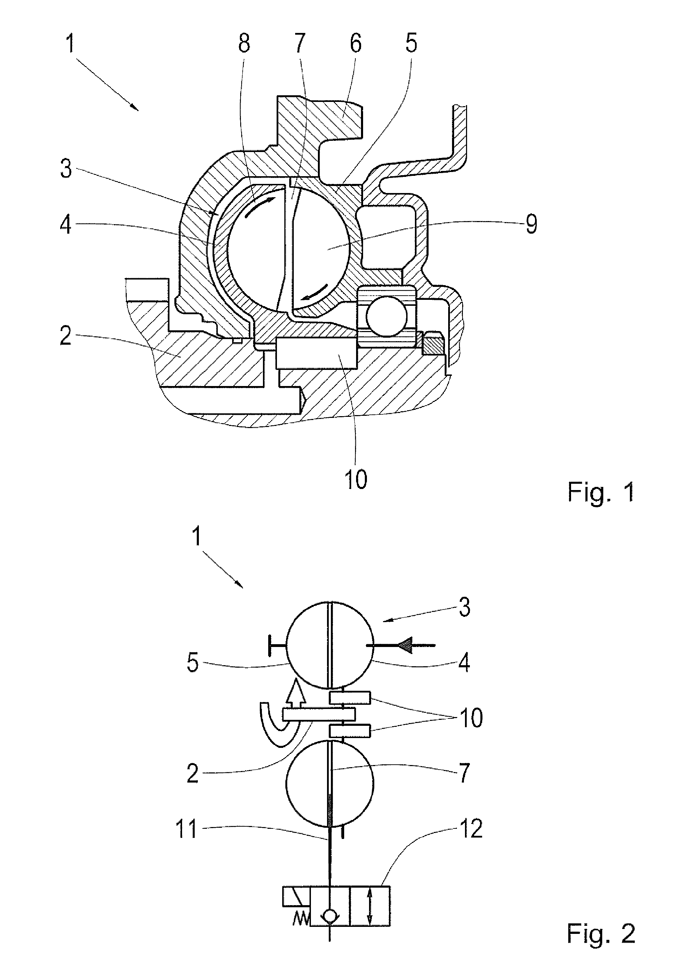

Aus Fig. 1 geht eine Schnittansicht einer hydrodynamischen Dauerbremseinrichtung 1 hervor, welche vorliegend in einem Antriebsstrang eines Kraftfahrzeuges verbaut ist. Dabei ist diese hydrodynamische Dauerbremseinrichtung 1 abtriebsseitig eines Kraftfahrzeuggetriebes im Bereich einer Welle 2 angeordnet, bei welcher es sich um eine Getriebewelle des Kraftfahrzeuggetriebes, wie beispielsweise eine Abtriebswelle, handelt.

Wie in Fig. 1 zu erkennen ist, umfasst die hydrodynamische Dauerbremseinrichtung 1 einen Retarder 3, der sich aus einem Rotor 4 und einem Stator 5 zusammensetzt. Vorliegend ist der Stator 5 drehfest mit einem Gehäuse 6 gekoppelt, bei dem es sich vorliegend um ein Getriebegehäuse des Kraftfahrzeuggetriebes handelt. Des Weiteren definiert der Stator 5 gemeinsam mit dem Rotor 4 einen zwischenliegenden, torusförmigen Arbeitsraum 7, wobei sowohl der Rotor 4 als auch der Stator 5 auf Seiten dieses Arbeitsraumes 7 mit je einer Beschaufelung 8 bzw. 9 ausgestattet sind.

Befindet sich nun Flüssigkeit, wie beispielsweise Öl oder Wasser, in dem Arbeitsraum 7, so wird diese Flüssigkeit auf dem Fachmann prinzipiell bekannte Art und Weise bei einer Drehbewegung des Rotors 4 durch die Beschaufelung 8 des Rotors 4 mitgenommen und in Richtung der Beschaufelung 9 des Stators 5 beschleunigt. Beim Auftreffen auf die stillstehende Beschaufelung 9 stützt sich die Flüssigkeit dann an dieser Beschaufelung 9 ab und wird wiederum zu der Beschaufelung 8 des Rotors 4 zurückgeleitet. Dabei wirkt die zurückgeleitete Flüssigkeit verzögernd auf den Rotor 4 und bremst diesen in seiner Drehbewegung.

Als Besonderheit sind die Welle 2 und der Rotor 4 vorliegend nicht starr miteinander gekoppelt, sondern der Rotor 4 ist auf der Welle 2 über einen zwischenliegenden, schaltbaren Freilauf 10 aufgesetzt, der vorliegend nur schematisch dargestellt ist. Der Freilauf 10 kann dabei über einen - vorliegend nicht weiter dargestellten - hydraulischen Aktuator in einen gesperrten Zustand überführt werden, in welchem er den Rotor 4 drehfest mit der Welle 2 koppelt, wohingegen abseits dieser Sperrung eine freie Verdrehbarkeit des Rotors 4 zur Welle 2 durch den Freilauf 10 ermöglicht wird. Dabei wird der Rotor 4 über den Freilauf 10 nur dann mit der Welle 2 gekoppelt, wenn ein Bremsmoment an der Welle 2 hervorgerufen werden soll, also ein Bremsbetrieb des Retarders 3 erwünscht ist.

Aufgrund der Tatsache, dass eine Bremswirkung des Retarders 3 gezielt zuschaltbar ist, ansonsten aber eine ungehinderte Drehbewegung der Welle 2 zugelassen wird, kann im Arbeitsraum 7 des Retarders 3 permanent eine Flüssigkeitsmenge belassen werden. Im vorliegenden Fall ist der Arbeitsraum 7 dabei stets mit einer Mindestflüssigkeitsmenge teilbefüllt, so dass bereits ab Koppelung des Rotors 4 mit der Welle 2 ein gewisses Bremsmoment an der Welle 2 hervorgerufen und dementsprechend ein gutes Ansprechverhalten der hydrodynamischen Dauerbremseinrichtung 1 gewährleistet wird. Nach Koppelung des Rotors 4 mit der Welle 2 kann das Bremsmoment dann dadurch erhöht werden, dass dem Arbeitsraum 7 weitere Flüssigkeit zugeführt wird, wobei die Flüssigkeitsmenge im Arbeitsraum 7 dann nach Beendigung eines Bremsbetriebes des Retarders 3 wieder auf die Mindestmenge reduziert wird.

Um diese Mindestmenge an Flüssigkeit im Arbeitsraum 7 halten zu können und zu verhindern, dass sich der Arbeitsraum 7 aufgrund des nach einer Entkoppelung von der Welle 2 ggf. noch nachlaufenden Rotors 4 vollständig oder zu stark entleert, ist, wie in der schematischen Ansicht der hydrodynamischen Dauerbremseinrichtung 1 in Fig. 2 zu sehen ist, in einer von dem Arbeitsraum 7 abzweigenden Abführleitung 11 ein Ventil 12 vorgesehen. Dieses, vorliegend als 2/2-Wegeventil ausgestaltete Ventil 12 kann dabei gezielt in die in Fig. 2 zu sehende Schaltstellung bewegt werden, in welcher das Ventil 12 die Abführleitung 11 sperrt und dementsprechend einen Rückstau an Flüssigkeit in den Arbeitsraum 7 bewirkt. In der Folge wird eine Mindestmenge an Flüssigkeit im Arbeitsraum 7 gehalten. Die Abführleitung 11, sowie das Ventil 12 sind dabei in Fig. 2 repräsentativ für ggf. weitere vorgesehene Abführleitungen und entsprechende Ventile dargestellt.

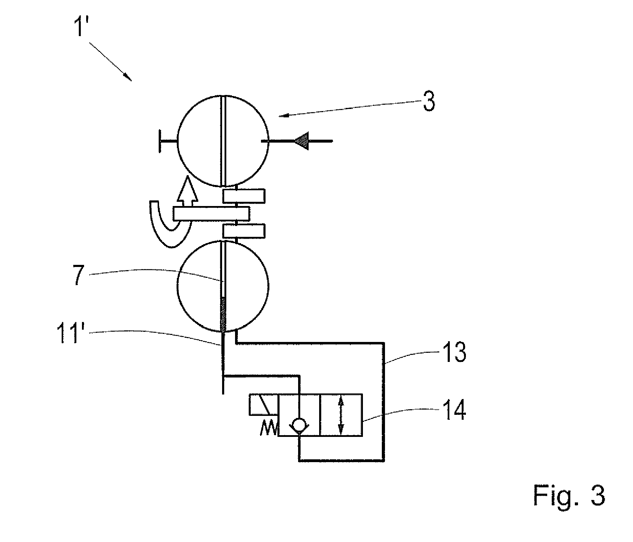

Aus Fig. 3 geht des Weiteren eine schematische Ansicht einer hydrodynamischen Dauerbremseinrichtung 1' entsprechend einer zweiten Ausführungsform der Erfindung hervor. Dabei entspricht diese Dauerbremseinrichtung 1' weitestgehend der Dauerbremseinrichtung 1 aus den Fig. 1 und 2, wobei als Unterschied zu der vorhergehenden Variante eine Mindestmenge an Flüssigkeit im Arbeitsraum 7 des Retarders 3 durch Vorsehen eines Bypasses 13 gehalten wird. Dieser Bypass 13 zweigt dabei von einer Abführleitung 11' ab und kann gezielt über ein Ventil 14 zugeschaltet werden, das vorliegend wiederum als 2/2-Wegeventil ausgeführt ist.

In der in Fig. 3 dargestellten Schaltstellung des Ventils 14 kann die in dem Arbeitsraum 7 befindliche Flüssigkeit ungehindert über die Abführleitung 11' entweichen, wohingegen ab Überführung des Ventils 14 in seine andere Schaltstellung der Bypass 13 geöffnet ist. In diesem Fall wird die aus dem Arbeitsraum 7 entweichende Flüssigkeit über den Bypass 13 wieder direkt in den Arbeitsraum 7 zurückgeführt, so dass durch entsprechende Ansteuerung des Ventils 14 eine Entleerung des Arbeitsraums 7 bis auf eine gewünschte Mindestflüssigkeitsmenge geregelt werden kann.

Mittels der erfindungsgemäßen Ausgestaltungen einer hydrodynamischen Dauerbremseinrichtung kann eine verlustarme und einfach zu betätigende Einrichtung geschaffen werden.

### Bezugszeichen

- 1, 1': Hydrodynamische Dauerbremseinrichtung
- 2: Welle
- 3: Retarder
- 4: Rotor
- 5: Stator
- 6: Gehäuse
- 7: Arbeitsraum
- 8: Beschaufelung
- 9: Beschaufelung
- 10: Freilauf
- 11, 11': Abführleitung
- 12: Ventil
- 13: Bypass
- 14: Ventil

## Patentansprüche

1. Hydrodynamische Dauerbremseinrichtung (1; 1'), umfassend einen Stator (5) und einen Rotor (4), welcher für einen Bremsbetrieb mit einer Welle (2) koppelbar ist, **dadurch gekennzeichnet, dass** zwischen der Welle (2) und dem Rotor (4) ein schaltbarer Freilauf (10) vorgesehen ist, der in einem gesperrten Zustand den Rotor (4) mit der Welle (2) koppelt.

2. Dauerbremseinrichtung (1; 1') nach Anspruch 1, **dadurch gekennzeichnet, dass** der Rotor (4) über den Freilauf (10) auf der Welle (2) aufgesetzt ist, wobei der Freilauf (10) im gesperrten Zustand den Rotor (4) drehfest mit der Welle (2) verbindet und abseits des gesperrten Zustands eine Verdrehbarkeit des Rotors (4) zur Welle (2) zulässt.

3. Dauerbremseinrichtung (1; 1') nach Anspruch 1, **dadurch gekennzeichnet, dass** der Freilauf (10) elektrisch oder hydraulisch aktuierbar ist.

4. Dauerbremseinrichtung (1; 1') nach Anspruch 1, **dadurch gekennzeichnet, dass** ein zwischen Rotor (4) und Stator (5) definierter Arbeitsraum (7) permanent zumindest teilbefüllt ist.

5. Dauerbremseinrichtung (1; 1') nach Anspruch 4, **dadurch gekennzeichnet, dass** Mittel vorgesehen sind, welche eine Flüssigkeitsmenge im Arbeitsraum (7) halten.

6. Dauerbremseinrichtung (1) nach Anspruch 5, **dadurch gekennzeichnet, dass** die Mittel durch mindestens ein Ventil (12) gebildet sind, welches in je einer Abführleitung (11) für Flüssigkeit vorgesehen ist und in einer Schaltstellung die je eine Abführleitung (11) sperrt.

7. Dauerbremseinrichtung (1') nach Anspruch 5, **dadurch gekennzeichnet, dass** die Mittel durch mindestens einen Bypass (13) gebildet sind, über welchen die den Arbeitsraum (7) verlassende Flüssigkeit wieder direkt in den Arbeitsraum (7) zurückführbar ist.

8. Antriebsstrang eines Kraftfahrzeuges, umfassend eine hydrodynamische Dauerbremseinrichtung (1; 1') nach einem der Ansprüche 1 bis 7.
